# EUROPÄISCHE PATENTSCHRIFT

(11) **EP 1 194 214 B1**
(45) Veröffentlichungstag und Bekanntmachung des Hinweises auf die Patenterteilung: **30.06.2004**
(21) Anmeldenummer: 00931004.6
(22) Anmeldetag: 03.04.2000
(51) Int. Cl.: B01D 53/94, F01N 3/20, F01N 3/10, B01D 53/86, B01D 53/90, B01D 53/56

(54) **VERFAHREN UND VORRICHTUNG ZUM EINBRINGEN EINES GASFÖRMIGEN REDUKTIONSMITTELS EINES STICKOXIDS IN EIN GASGEMISCH**
METHOD AND DEVICE FOR INTRODUCING A GASEOUS REDUCING AGENT OF A NITROGEN OXIDE INTO A GAS MIXTURE
PROCEDE ET DISPOSITIF POUR INCORPORER UN AGENT DE REDUCTION GAZEUX D'UN OXYDE D'AZOTE DANS UN MELANGE GAZEUX

(30) Priorität: 30.04.1999 DE 19919914
(43) Veröffentlichungstag der Anmeldung: 10.04.2002
(73) Patentinhaber: SIEMENS AKTIENGESELLSCHAFT, 80333 München (DE)
(72) Erfinder: BERTHOLD, Thomas, D-80995 München (DE); PREU, Gabriele, D-81667 München (DE)
(86) Internationale Anmeldenummer: PCT/DE2000/001018
(87) Internationale Veröffentlichungsnummer: WO 2000/066252

(56) Entgegenhaltungen:
- EP-A- 0 615 777
- EP-A- 0 848 985
- EP-A- 0 878 608
- WO-A-99/29432
- DE-A- 4 200 514
- US-A- 4 731 231
- US-A- 5 809 775

## Beschreibung

Die Erfindung betrifft ein Verfahren zum Einbringen mindestens eines gasförmigen Reduktionsmittels eines Stickoxids in ein Gasgemisch, wobei mindestens einem Körper aus mindestens einem Ausgangsmaterial des Reduktionsmittels mit Hilfe eines Mittels zum Temperieren des Körpers eine thermische Energie unter Bildung des Reduktionsmittels zugeführt wird und das Reduktionsmittel und das Gasgemisch miteinander in Kontakt gebracht werden. Neben dem Verfahren wird eine Vorrichtung zum Durchführen des Verfahrens angegeben.

Bei einer Verbrennung eines fossilen Energieträgers in Anwesenheit von Luft entsteht als unerwünschtes Nebenprodukt Stickoxid. Im Hinblick auf eine Umweltverträglichkeit der Verbrennung ist es wünschenswert, eine Bildung von Stickoxiden zu unterbinden bzw. Stickoxide nachträglich aus einem Abgas der Verbrennung zu entfernen. Eine nachträgliche Entfernung der Stickoxide geschieht beispielsweise dadurch, daß dem Abgas ein Reduktionsmittel der Stickoxide beigemengt wird. Bei dem aus US 4 731 231 bekannten Verfahren wird in das Abgas Cyansäure als Reduktionsmittel eingeleitet. Auf einer Oberfläche eines Katalysators reagiert die Cyansäure mit Stickoxid zu molekularem Stickstoff und Kohlendioxid. Gemäß diesem Verfahren wird das Reduktionsmittel (Cyansäure) durch Sublimation eines festen Ausgangsmaterials des Reduktionsmittels, beispielsweise Cyanursäure, gewonnen. Die Cyanursäure wird in einem beheizbaren Behälter bereitgestellt.

Zu einer wirkungsvollen Reduzierung von Stickoxid ist es notwendig, eine einem Gehalt an Stickoxid im Abgas entsprechende Menge an Reduktionsmittel in das Abgas einzuleiten.

Aus der EP 0 878 608 A2 geht ein Verfahren hervor, bei dem fester Harnstoff mittel thermischer Energie geschmolzen wird. Das erhaltene Schmelzprodukt wird dem Abgas als Reduktionsmittel der Stickoxide zugegeben.

Aus der US 5 809 775 und der DE 42 00 514 A1 geht jeweils ein Verfahren hervor, bei dem festes Ausgangsmaterial außerhalb des Abgasstroms mit Hilfe thermischer Energie pyrolysiert wird. Als Ausgangsmaterial wird beispielsweise Harnstoff verwendet. Durch die Pyrolyse entsteht Ammoniak, das dem Abgas als Reduktionsmittel der Stickoxide zugeführt wird.

Aus der EP 0 615 777 A1 geht ein Verfahren hervor, nach dem fester Harnstoff in Form eines Aerosols in das Abgas eingebracht wird. Im Abgas wird mit Hilfe eines Hydrolysekatalysators aus dem Harnstoff Ammoniak gebildet.

Aufgabe der Erfindung ist es, ein zum bekannten Stand der Technik alternatives Verfahren zum Einbringen eines gasförmigen Reduktionsmittel von Stickoxiden in ein Gasgemisch anzugeben, bei dem die in das Gasgemisch einzubringende Menge an Reduktionsmittel in einfacher Weise eingestellt werden kann.

Zur Lösung der Aufgabe wird ein Verfahren zum Einbringen mindestens eines gasförmigen Reduktionsmittels eines Stickoxids in ein Gasgemisch angegeben, wobei mindestens einem Körper aus mindestens einem festen Ausgangsmaterial des Reduktionsmittels mit Hilfe eines Mittels zum Temperieren des Körpers eine thermische Energie unter Bildung des Reduktionsmittels zugeführt wird und das Reduktionsmittel und das Gasgemisch miteinander in Kontakt gebracht werden, dadurch gekennzeichnet, daß das Reduktionsmittel und das Gasgemisch durch eine Öffnung des Mittels zum Temperieren des Körpers miteinander in Kontakt gebracht werden.

Das Gasgemisch ist beispielsweise das Abgas einer Verbrennungsmaschine, insbesondere eines Diesel- oder Ottomotors. Das Gasgemisch kann auch das Abgas eines fossil befeuerten Kraftwerks.

Das gasförmige Reduktionsmittel ist beispielsweise Ammoniak. Ammoniak hat den Vorteil, daß es (in Gegenwart eines Katalysators) mit Stickoxiden zu molekularem Stickstoff reagiert. Als Nebenprodukt entsteht dabei nur Kohlendioxid.

Ein Ausgangsmaterial des Reduktionsmittels ist beispielsweise Harnstoff. Harnstoff setzt bei einer Temperatur über dem Schmelzpunkt des Harnstoffs Ammoniak frei. Bei einer Hydrolyse des Harnstoffs (Zersetzung in Gegenwart von Wasser, das im Abgas einer Verbrennungsmaschine automatisch vorhanden ist), wird als Nebenprodukt nur Kohlendioxid frei. Insofern kann Harnstoff als ideales Ausgangsmaterial für Ammoniak angesehen werden. Harnstoff ist aber hygroskopisch und daher nur bedingt lagerfähig.

Eine hygroskopische Eigenschaft eines Materials läßt sich dadurch erniedrigen, daß eine reaktive Oberfläche des Materials für die Absorption von Wasser erniedrigt wird. Deshalb wird das Ausgangsmaterial in Form eines Körpers bereitgestellt. Insbesondere wird ein Körper mit einem verdichteten Ausgangsmaterial verwendet. Der Körper besteht beispielsweise aus einem gepreßten Pulver des Ausgangsmaterials. Umgeschmolzenes Ausgangsmaterial ist ebenso denkbar. Das Ausgangsmaterial kann auch in eine feste Matrix eingebettet sein. Das Material der Matrix ist vorzugsweise wasserabweisend. Außerdem sollte sich das Material leicht in umweltverträgliche Reaktionsprodukte überführen lassen.

Die thermische Energie wird insbesondere einer Oberfläche des Körpers zugeführt. Insbesondere wird die thermische Energie mit Hilfe einer temperierbaren Haltungsvorrichtung für den Körper durch Wärmeleitung zugeführt.

Eine Zuführung der thermischen Energie gelingt beispielsweise auch durch Konvektion oder thermische Strahlung. In einer weiteren Ausgestaltung wird die thermische Energie durch das Gasgemisch bereitgestellt.

In einer besonderen Ausgestaltung des Verfahrens werden eine Oberfläche des Körpers, an der die Bildung des Reduktionsmittels stattfindet, und das Gasgemisch in Kontakt miteinander gebracht. Beispielsweise strömt das Abgas der Verbrennungsmaschine in einem Abgasrohr. Das strömende, durch die Verbrennung erhitzte Gasgemisch wird an dem Körper vorbeigeleitet. Eine Temperatur des Gasgemisches bewegt sich beispielsweise zwischen 350° und 600° C. Diese Temperaturen reichen aus, um aus Harnstoff Ammoniak freizusetzen. In dieser Ausgestaltung wird die thermische Energie per Konvektion durch das Gasgemisch bereitgestellt.

In einer weiteren Ausgestaltung fungiert das Mittel zum Temperieren als Katalysator der Bildung des Reduktionsmittels. Beispielsweise ist das Mittel zum Temperieren eine Halterungsvorrichtung für den Körper mit dem Ausgangsmaterial. Die Halterungsvorrichtung fungiert beispielsweise als Hydrolysekatalysator für Harnstoff.

In einer besonderen Ausgestaltung wird in dem Verfahren als Reduktionsmittel Ammoniak gebildet. Aliphatische Ammoniakderivate (Amine) sind ebenfalls denkbar. Als Ausgangsmaterial des Reduktionsmittels wird insbesondere Harnstoff verwendet. Andere Ausgangsmaterialien wie beispielsweise Ammoniumcarbonat, Ammoniumcarbamat, Ammoniumhydrogencarbonat, Ammoniumformiat, Ammoniumoxalat, Ammoniumhydroxid, Cyanursäure, Harnstoff-Formaldehyd, Melamin sowie Mischungen dieser Verbindungen.

Insbesondere wird ein Körper bei dem Verfahren verwendet, der aus einem verdichteten Ausgangsmaterial besteht. Dies ist beispielsweise ein gepreßtes Pulver des Ausgangsmaterials oder das Ausgangsmaterial in umgeschmolzener Form, wobei der Körper durch eine Erstarrung einer Schmelze in einer Form oder an einer Vorrichtung zu einer Wärmeabfuhr gebildet wird. Ein derartiger Körper zeigt eine geringere hygroskopische Eigenschaft als pulverförmiges, loses Ausgangsmaterial. Der Körper ist gut lagerfähig.

Für eine praktische Durchführbarkeit dieses Verfahrens ist es zudem vorteilhaft, eine vorhandene Menge des Ausgangsmaterials zu kontrollieren. Ein Kontrollieren erfolgt beispielsweise mit Hilfe einer Lichtschranke, die einen Füllstand des Ausgangsmaterials bzw. ein Ausmaß des Körpers aus dem Ausgangsmaterial angibt.

In einer besonderen Ausgestaltung des Verfahrens wird der Körper gegen die Halterungsvorrichtung gedrückt. Dadurch ist gewährleistet, daß der Körper ständig mit dem Mittel zum Temperieren des Körpers in Kontakt steht.

Insbesondere wird bei dem Verfahren ein Gehalt an Stickoxid im Gasgemisch gemessen und entsprechend dem Gehalt eine Menge der thermischen Energie zugeführt. Dadurch wird gewährleistet, daß möglichst viel Stickoxid abgebaut wird. Gleichzeitig wird sichergestellt, daß nicht zuviel Reduktionsmittel freigesetzt wird, das die Umwelt belasten könnte. Der Gehalt an Stickoxid wird beispielsweise mit einem Gassensor bestimmt.

Die Menge der thermischen Energie wird beispielsweise durch eine Heizleistung des Mittels zum Temperieren bestimmt.

In einer weiteren Ausgestaltung der Erfindung ist es auch möglich, eine Kühlung des Körpers mit dem Ausgangsmaterial durchzuführen. Beispielsweise wird der Körper durch das Abgas der Verbrennungsmaschine so erhitzt, daß zuviel Reduktionsmittel frei wird. Durch eine Kühlung des Körpers läßt sich somit ein Umsatz an Ausgangsmaterial reduzieren bzw. regulieren. Die Kühlung erfolgt beispielsweise durch ein mit dem Mittel zum Temperieren verbundenen Peltier-Element oder durch verstärkte Luftzuführung. Somit gelingt es, in jeder Phase des Betriebs einer Verbrennungsmaschine eine optimale Reduzierung des Gehalts an Stickoxid durchzuführen.

Das Einbringen an gasförmigen Reduktionsmittel in das Gasgemisch kann auch durch einen zusätzlichen Gasstrom, beispielsweise durch Druckluft, beeinflußt werden.

Das beschriebene Verfahren wird insbesondere zum Einbringen des Reduktionsmittels in das Abgas einer Verbrennungsmaschine durchgeführt. Wie oben angedeutet, ist eine derartige Verbrennungsmaschine insbesondere ein Diesel- oder Ottomotor. Dieses Verfahren kann aber auch zur Reduktion von Stickoxiden des Abgases eines Kraftwerks eingesetzt werden. Das Verfahren ist zudem nicht auf Verbrennungsmaschinen beschränkt, die mit fossilen Energieträgern befeuert werden. Bei einer Verbrennungsmaschine, bei der beispielsweise Wasserstoff durch Luftsauerstoff oxidiert wird, kann ebenfalls Stickoxid entstehen. Stickoxide des entsprechenden Abgases werden auf die beschriebene Weise entfernt.

Gemäß einem weiteren Aspekt der Erfindung wird eine Vorrichtung zum Durchführen eines zuvor beschriebenen Verfahrens zum Einbringen mindestens eines gasförmigen Reduktionsmittels eines Stickoxids in ein Gasgemisch angegeben. Dabei sind der Körper aus dem festen Ausgangsmaterial und das Mittel zum Temperieren des Körpers aneinander angeordnet und das Mittel weist eine Öffnung zum Einbringen des Reduktionsmittels in das Gasgemisch auf. Das Mittel ist beispielsweise eine Metallplatte mit mehreren Löchern.

Das Mittel zum Temperieren ist beispielsweise eine temperierbare Halterungsvorrichtung des Körpers. Die Halterungsvorrichtung weist insbesondere eine Widerstandsheizung auf.

Das Mittel zum Temperieren weist in einer besonderen Ausgestaltung mindestens eine Spirale auf. Die Spirale kann aus einem Metallband oder einem Draht bestehen. Die Spirale kann auch zu einer Spiralschraube geformt sein.

In einer weiteren Ausgestaltung weist das Mittel zum Temperieren mindestens ein Gitter oder ein Sieb auf. Das Gitter ist beispielsweise ein Drahtgeflecht. Das Drahtgeflecht weist beispielsweise ein Metall auf.

Insbesondere ist das Mittel zum Temperieren gegenüber dem Ausgangsmaterial und/oder dem Reduktionsmittel inert.

Der Körper mit dem Ausgangsmaterial befindet sich beispielsweise in einem Behälter. Der Behälter ist unmittelbar oder mittelbar an einer Stelle des Abgasrohrs befestigt, wobei eine Wandung des Abgasrohres an dieser Stelle mindestens eine Öffnung aufweist. Durch diese Öffnung gelangt das Reduktionsmittel in das Abgas. Das Abgasrohr kann dabei selbst das Mittel zum Temperieren des Körpers sein. Das Mittel zum Temperieren kann auch in der Öffnung der Wandung des Abgasrohres angeordnet sein.

Der Behälter ist insbesondere so ausgestattet, daß der Körper mit dem Ausgangsmaterial gegenüber einer Umgebungsluft abgeschirmt ist. Wasser aus der Umbebungsluft wird von einem eventuell hygroskopischen Ausgangsmaterial nicht absorbiert. Um ein Wasseranziehen zusätzlich zu unterbinden kann der Behälter mit einem Trockenmittel wie Silikagel ausgestattet sein. Ebenso kann der Körper selbst ein Trockenmittel aufweisen. Denkbar ist auch, daß der Körper an einer Oberfläche eine wasserabweisende Schicht aufweist.

Die Vorrichtung weist beispielsweise eine Vorspanneinrichtung des Körpers auf. Diese Vorspanneinrichtung sorgt dafür, daß eine bestimmte Anordnung des Körpers am Mittel zum Temperieren gewährleistet ist. Beispielsweise ist die Vorspanneinrichtung eine Feder, die den Körper gegen eine beheizbare Halterungsvorrichtung für den Körper drückt. Die Feder ist beispielsweise in einem Deckel des Behälters integriert, der den Körper enthält. Auf diese Weise stehen der Körper und das Mittel zum Temperieren ständig in Kontakt miteinander. Dies gelingt im übrigen auch durch Ausnutzung der Schwerkraft, die den Körper gegen das Mittel zum Temperieren drückt.

In einer weiteren Ausgestaltung weist die Vorrichtung mindestens ein Mittel zur Kontrolle einer vorhandenen Menge des Ausgangsmaterials auf. Dieses Mittel ist insbesondere eine Lichtschranke. Die Lichtschranke besteht beispielsweise aus einer Licht emittierenden Photodiode und einem das Licht registrierenden Photodetektor. Wenn nur mehr eine bestimmte Menge an Ausgangsmaterial vorhanden ist, d.h. wenn ein bestimmter Teil des Körpers mit dem Ausgangsmaterial verbraucht ist, wird ein Signal generiert, das einen Betreiber beispielsweise einen Autofahrer über die vorhandene Menge an Ausgangsmaterial informiert. Ein Informieren kann beispielsweise mit einer Aufforderung zu einem "Nachtanken" des Ausgangsmaterials verbunden sein. Ebenso ist denkbar, daß ein Zündvorgang unterbrochen wird. Mit Hilfe mehreren Mittel zur Kontrolle einer vorhandenen Menge an Ausgangsmaterial kann ein Verbrauch an Ausgangsmaterial genau nachvollzogen werden.

In einer weiteren Ausgestaltung ist die Vorrichtung so gestaltet, daß ein Vermischung des gasförmigen Reduktionsmittels mit dem Gasgemisch begünstigt wird. Beispielsweise ist die Halterungsvorrichtung in einem Gasstrom des Gasgemisches plaziert. Dadurch kommt es zu einer Verwirbelung von Reduktionsmittel und Gasgemisch. Das Reduktionsmittel kann auch über eine Düse oder eine Windhutze eingeleitet werden.

Mit der vorliegenden Erfindung zum Einbringen eines Reduktionsmittels von Stickoxiden verbinden sich zusammenfassend folgende Vorteile:
- Es wird ein festes Ausgangsmaterial des Reduktionsmittels bereitgestellt. Bei einem Einbringen einer wäßrigen Lösung des Ausgangsmaterials würde beispielsweise die Gefahr bestehen, daß ein Mittel zum Dosieren des Ausgangsmaterials, beispielsweise eine Düse, durch auskristallisiertes Ausgangsmaterial verstopft wird.
- Das Ausgangsmaterial wird in einer wenig hygroskopischen und damit leicht handhabbaren Form eingesetzt.
- Es wird eine einfache, wenig defektanfällige und damit kostengünstige Vorrichtung bereitgestellt.
- Das Reduktionsmittel kann einfach und exakt dosiert werden.

Anhand mehrerer Ausführungsbeispiele und der dazugehörigen Zeichnungen wird im folgenden eine Verfahren zum Einbringen eines gasförmigen Reduktionsmittels in ein Gasgemisch und eine dazu benutzte Vorrichtung vorgestellt. Die Figuren sind schematisch und stellen keine maßstabsgetreuen Abbildungen dar.

Figur 1 zeigt einen Querschnitt einer Vorrichtung zum Einbringen eines gasförmigen Reduktionsmittels von Stickoxiden in ein Abgas einer Verbrennungsmaschine.

Figur 2 zeigt ein Verfahren zum Einbringen eines gasförmigen Reduktionsmittels von Stickoxiden in ein Abgas.

Figuren 3a bis 3c zeigen verschiedene Ausführungsformen des Mittels zum Temperieren des Körpers.

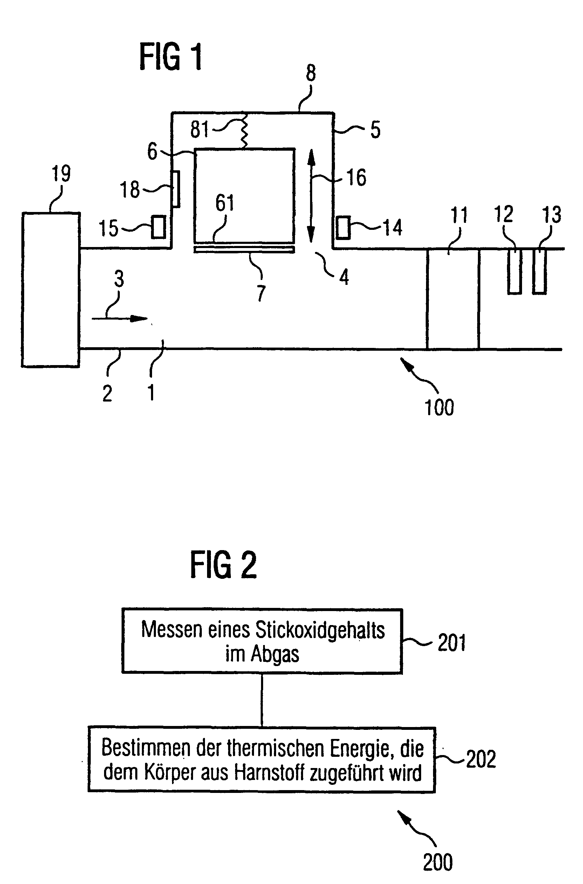

Mit Hilfe des Verfahrens 200 bzw. der Vorrichtung 100 werden Stickoxide im Abgas 1 eines Dieselmotors 19 reduziert. Das Abgas 1 wird durch ein Abgasrohr 2 mit einer Strömungsrichtung 3 geleitet (siehe Figur 1).

Das Abgasrohr 2 weist in einer Wandung eine Öffnung 4 auf. An der Wandung ist an der Stelle des Abgasrohres 2, die die Öffnung 4 aufweist, ein Behälter 5 befestigt. Der Behälter 5 ist ein Rohr und weist einen Deckel 8 und ein Trockenmittel 18 aus Silikagel auf. In dem Behälter 5 ist ein zylinderförmiger Körper 6 aus gepreßtem Harnstoff angeordnet. In der Öffnung 4 des Abgasrohres 2 ist eine Mittel 7 zum Temperieren des Körpers 6 plaziert. Das Mittel 7 zum Temperieren ist gleichzeitig eine Halterungsvorrichtung für den Körper 6. Das Mittel 7 zum Temperieren weist eine elektrische Widerstandsheizung auf. Der Körper 6 ist zwischen dem Mittel 7 und einem Deckel 8 eingespannt. Dazu weist der Deckel 8 eine Feder auf, die den Körper 6 gegen das Mittel 7 drückt. Dadurch stehen der Körper 6 und das Mittel 7 zum Temperieren in ständigem Kontakt miteinander.

Das Mittel 7 zum Temperieren beheizt den Körper 6. Zusätzlich wird der Körper 6 durch das vorbeiströmende Abgas 1 beheizt. Durch die Zuführung der thermischen Energie wird Harnstoff zu Ammoniak umgesetzt, das durch die Löcher 9 des Mittels 7 in das Abgas 1 gelangt.

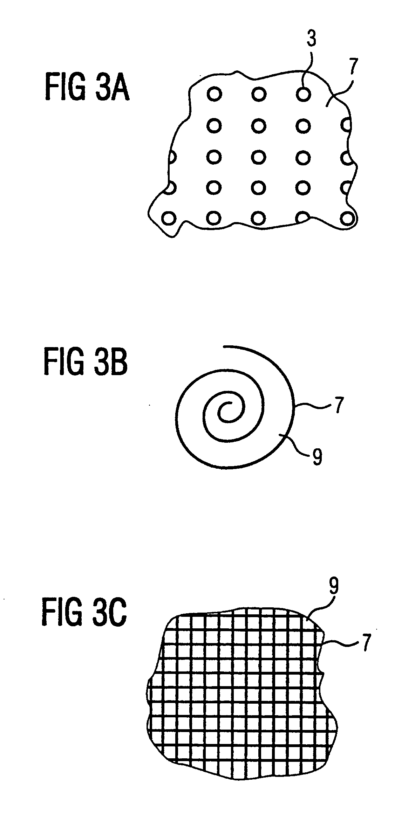

In einem ersten Ausführungsbeispiel ist das Mittel 7 zum Temperieren eine Scheibe mit Löchern 9 (Figur 3a). In weiteren Ausführungsbeispielen ist das Mittel 7 eine Metallspirale (Figur 3b) und ein Gitter bzw. Sieb (Figur 3c). Die bei diesen Ausführungsbeispielen vorhandenen Löcher 9 weisen einen Durchmesser von ca. 2 mm auf. Der Körper 6 und das Abgas 1 stehen durch diese Öffnungen 9 ebenfalls in Kontakt.

Folgender Regelungsablauf findet beim Einbringen des Harnstoffs in das Abgas 1 statt: Ausgangspunkt ist ein Start des Dieselmotors. Mit dem Start wird das Mittel 7 zum Temperieren beheizt. Gleichzeitig wird ein Messen 201 von Stickoxid im Abgas 1 in Gang gesetzt. Ein Gassensor 12 für Stickoxide, der das Abgas nach einem Katalysator 11 für die Umsetzung von Ammoniak und Stickoxiden zu molekularem Stickstoff und Kohlendioxid beschleunigt, wird ein Gehalt an Stickoxiden im Abgas 1 untersucht. Entsprechend dem Gehalt wird die thermische Energie bestimmt, die dem Körper zugeführt wird (Schritt 202). Ist der Gehalt an Stickoxiden zu hoch, wird eine Heizleistung des Mittels 7 erhöht. Dadurch wird dem Körper mit dem Harnstoff mehr thermische Energie zugeführt. Es wird mehr Harnstoff zu Ammoniak umgesetzt, was zu einer Verringerung des Gehalts an Stickoxiden im Abgas 1 führt. Sinkt der registrierte Gehalt an Stickoxiden unter einen bestimmten Wert, wird die Heizleistung verringert. Dadurch wird verhindert, daß zuviel Ammoniak in das Abgas eingeleitet wird und damit die Umwelt mit Ammoniak belastet und Reduktionsmittel verschwendet wird.

In einem weiteren Ausführungsbeispiels ist ein weiterer Gassensor 13 nach dem Katalysator 11 vorhanden, der einen Gehalt an Ammoniak im Abgas 1 bestimmt. Ist der bestimmte Gehalt an Ammoniak im Abgas zu hoch, wird die thermische Energie verringert, die dem Körper 6 zugeführt wird.

Die verschiedenen Ausführungsbeispiele der Vorrichtung 2 verfügen überdies über ein Mittel zum Kontrollieren einer Menge an vorhandenem Ausgangsmaterial. Dieses Mittel ist eine Lichtschranke, die eine Licht emittierende Photodiode 14 und einen das Licht erfassenden Photodetektor 15 aufweist. Zwischen Photodiode 14 und Photodetektor 15 ist der Körper 6 für die Lichtschranke optisch zugänglich angeordnet. Sobald Ausgangsmaterial zum Reduktionsmittel umgesetzt wird, nimmt eine Höhe 16 des Körpers 6 ab. Sinkt die Höhe 16 unter eine Abmessung, die durch die Anordnung der Lichtschranke und des Mittels 7 zum Temperieren gegeben ist, wird ein Signal generiert, das dem Betreiber anzeigt, daß eine bestimmte Menge an vorhandenem Ausgangsmaterial unterschritten ist.

## Patentansprüche

1. Verfahren zum Einbringen mindestens eines gasförmigen Reduktionsmittels eines Stickoxids in ein Gasgemisch (1), wobei mindestens einem Körper aus mindestens einem festen Ausgangsmaterial des Reduktionsmittels mit Hilfe eines Mittels zum Temperieren des Körpers eine thermische Energie unter Bildung des Reduktionsmittels zugeführt wird und das Reduktionsmittel und das Gasgemisch (1) miteinander in Kontakt gebracht werden,
**dadurch gekennzeichnet, daß** das Reduktionsmittel und das Gasgemisch durch eine Öffnung des Mittels zum Temperieren des Körpers miteinander in Kontakt gebracht werden.

2. Verfahren nach Anspruch 1, wobei die thermische Energie durch das Gasgemisch (1) bereitgestellt wird.

3. Verfahren nach Anspruch 1 oder 2, wobei eine Oberfläche (61) des Körpers (6), an der die Bildung des Reduktionsmittels stattfindet, und das Gasgemisch in Kontakt miteinander gebracht werden.

4. Verfahren nach einem der Ansprüche 1 bis 3, wobei das Mittel (7) zum Temperieren als Katalysator der Bildung des Reduktionsmittels fungiert.

5. Verfahren nach einem der Ansprüche 1 bis 4, wobei ein Ausgangsmaterial verwendet wird, aus dem ein mindestens ein Stickstoffatom aufweisendes Reduktionsmittel gebildet wird.

6. Verfahren nach Anspruch 5, wobei ein Ausgangsmaterial verwendet wird, aus dem Ammoniak gebildet wird.

7. Verfahren nach Anspruch 5 oder 6, wobei als Ausgangsmaterial Harnstoff verwendet wird.

8. Verfahren nach einem der Ansprüche 1 bis 7, wobei ein Körper (6) aus einem verdichteten Ausgangsmaterial verwendet wird.

9. Verfahren nach einem der Ansprüche 1 bis 8, wobei eine vorhandene Menge des Ausgangsmaterials kontrolliert wird.

10. Verfahren nach einem der Ansprüche 1 bis 9, wobei der Körper (6) gegen das Mittel (7) zum Temperieren des Körpers gedrückt wird.

11. Verfahren nach einem der Ansprüche 1 bis 10, wobei ein Gehalt an Stickoxid im Gasgemisch (1) gemessen wird und entsprechend diesem Gehalt eine Menge der thermischen Energie dem Körper zugeführt wird.

12. Verfahren nach einem der Ansprüche 1 bis 11, wobei als Gasgemisch (1) ein Abgas einer Verbrennungsmaschine (19) verwendet wird.

13. Vorrichtung zum Durchführen eines Verfahrens zum Einbringen mindestens eines gasförmigen Reduktionsmittels eines Stickoxids in ein Gasgemisch (1) nach einem der Ansprüche 1 bis 12, wobei der Körper (6) aus dem festen Ausgangsmaterial und das Mittel (7) zum Temperieren des Körpers (6) aneinander angeordnet sind, und das Mittel eine Öffnung (9) zum Einbringen des Reduktionsmittels in das Gasgemisch (1) aufweist.

14. Vorrichtung nach Anspruch 13, wobei das Mittel zum Temperieren (7) eine Widerstandsheizung aufweist.

15. Vorrichtung nach Anspruch 13 oder 14, wobei das Mittel (7) zum Temperieren mindestens eine Spirale aufweist.

16. Vorrichtung nach einem der Ansprüche 13 bis 15, wobei das Mittel (7) zum Temperieren mindestens ein Gitter aufweist.

17. Vorrichtung nach einem der Ansprüche 13 bis 16, wobei das Mittel (7) zum Temperieren gegenüber dem Ausgangsmaterial und/oder dem Reduktionsmittel inert ist.

18. Vorrichtung nach einem der Ansprüche 13 bis 17, wobei ein Mittel (14, 15) zur Kontrolle einer vorhandenen Menge des Ausgangsmaterials vorhanden ist.

19. Vorrichtung nach Anspruch 18, wobei das Mittel zur Kontrolle (14, 15) der vorhandenen Menge eine Lichtschranke aufweist.

## Claims

1. Method for introducing at least one gaseous reducing agent for a nitrogen oxide into a gas mixture (1), thermal energy being supplied to at least one body made of at least one solid starting material of the reducing agent with the aid of a means (7) for controlling the temperature of the body, so as to form the reducing agent, and the reducing agent and the gas mixture (1) being brought into contact with one another, **characterized in that** the reducing agent and the gas mixture are brought into contact with one another through an opening in the means for controlling the temperature of the body.

2. Method according to Claim 1, in which the thermal energy is provided by the gas mixture (1).

3. Method according to one of Claims 1 or 2, in which a surface (61) of the body (6) at which the formation of the reducing agent takes place and the gas mixture are brought into contact with one another.

4. Method according to one of Claims 1 to 3, in which the means (7) for controlling the temperature acts as a catalyst for the formation of the reducing agent.

5. Method according to one of Claims 1 to 4, in which use is made of a starting material from which a reducing agent which has at least one nitrogen atom is formed.

6. Method according to Claim 5, in which use is made of a starting material from which ammonia is formed.

7. Method according to Claim 5 or 6, in which urea is used as starting material.

8. Method according to one of Claims 1 to 7, in which a body (6) made from a compacted starting material is used.

9. The method according to one of Claims 1 to 8, in which the quantity of starting material present is monitored.

10. Method according to one of Claims 1 to 9, in which the body (6) is pressed against the means (7) for controlling the temperature of the body.

11. Method according to one of Claims 1 to 10, in which the level of nitrogen oxide in the gas mixture (1) is measured, and a quantity of thermal energy which corresponds to this level is supplied to the body.

12. Method according to one of Claims 1 to 11, in which the gas mixture (1) used is an exhaust gas from an internal-combustion engine (19).

13. Device for carrying out a method for introducing at least one gaseous reducing agent for a nitrogen oxide into a gas mixture (1), according to one of Claims 1 to 12, body (6) made from the solid starting material and the means (7) for controlling the temperature of the body (6) are arranged against one another and the means has an opening (9) for introducing the reducing agent into the gas mixture (1).

14. Device according to Claim 13, in which the temperature-control means (7) has a resistance heating element.

15. Device according to Claim 13 or 14, in which the temperature-control means (7) has at least one coil.

16. Device according to one of Claims 13 to 15, in which the temperature-control means (7) has at least one grid.

17. Device according to one of Claims 13 to 16, in which the temperature-control means (7) is inert with respect to the starting material and/or the reducing agent.

18. Device according to one of Claims 13 to 17, in which there is a means (14, 15) for monitoring the amount of starting material which is present.

19. Device according to Claim 18, in which the means (14, 15) for monitoring the amount present has a light barrier.

## Revendications

1. Procédé d'introduction d'au moins un agent de réduction gazeux d'un oxyde d'azote dans un mélange de gaz (1), une énergie thermique étant amenée à au moins un corps constitué d'au moins une matière de départ solide de l'agent de réduction à l'aide d'un moyen pour tempérer le corps avec formation de l'agent de réduction et l'agent de réduction et le mélange de gaz (1) étant mis en contact l'un avec l'autre, **caractérisé en ce que** l'agent de réduction et le mélange de gaz sont mis en contact l'un avec l'autre par une ouverture du moyen permettant de tempérer le corps.

2. Procédé selon la revendication 1, l'énergie thermique étant fournie par le mélange de gaz (1).

3. Procédé selon la revendication 1 ou 2, une surface (61) du corps (6), sur laquelle a lieu la formation de l'agent de réduction, et le mélange de gaz étant mis en contact l'un avec l'autre.

4. Procédé selon l'une quelconque des revendications 1 à 3, le moyen (7) pour tempérer faisant office de catalyseur de la formation de l'agent de réduction.

5. Procédé selon l'une quelconque des revendications 1 à 4, une matière de départ étant utilisée à partir de laquelle un agent de réduction présentant au moins un atome d'azote est formé.

6. Procédé selon la revendication 5, une matière de départ étant utilisée à partir de laquelle de l'ammoniac se forme.

7. Procédé selon la revendication 5 ou 6, l'urée étant utilisée comme matière de départ.

8. Procédé selon l'une quelconque des revendications 1 à 7, un corps (6) constitué d'une matière de départ condensée étant utilisé.

9. Procédé selon l'une quelconque des revendications 1 à 8, une quantité présente de matière de départ étant contrôlée.

10. Procédé selon l'une quelconque des revendications 1 à 9, le corps (6) étant pressé contre le moyen (7) pour tempérer le corps.

11. Procédé selon l'une quelconque des revendications 1 à 10, la teneur en oxyde d'azote étant mesurée dans le mélange de gaz (1) et une quantité d'énergie thermique étant amenée au corps en fonction de cette teneur.

12. Procédé selon l'une quelconque des revendications 1 à 11, les gaz d'échappement d'un moteur à combustion (19) étant utilisés en tant que mélange de gaz (1).

13. Dispositif de réalisation d'un procédé d'introduction d'au moins un agent de réduction gazeux d'un oxyde d'azote dans un mélange de gaz (1) selon l'une quelconque des revendications 1 à 12, le corps (6) constitué de matière de départ solide et le moyen (7) pour tempérer le corps (6) étant disposés l'un contre l'autre, et ledit moyen présentant une ouverture (9) permettant l'introduction de l'agent de réduction dans le mélange de gaz (1).

14. Dispositif selon la revendication 13, le moyen pour tempérer (7) présentant un chauffage par effet de Joule.

15. Dispositif selon la revendication 13 ou 14, le moyen (7) pour tempérer présentant au moins une spirale.

16. Dispositif selon l'une quelconque des revendications 13 à 15, le moyen (7) pour tempérer présentant au moins une grille.

17. Dispositif selon l'une quelconque des revendications 13 à 16, le moyen (7) pour tempérer étant inerte par rapport à la matière de départ et/ou à l'agent de réduction.

18. Dispositif selon l'une quelconque des revendications 13 à 17, un moyen (14, 15) de contrôle d'une quantité présente de matière de départ étant présent.

19. Dispositif selon la revendication 18, le moyen de contrôle (14, 15) de la quantité présente présentant une barrière photoélectrique.
